# FASCICULE DE BREVET EUROPEEN

(11) **EP 0 593 373 B1**
(45) Date de publication et mention de la délivrance du brevet: **21.01.1998**
(21) Numéro de dépôt: 93420401.7
(22) Date de dépôt: 12.10.1993
(51) Int. Cl.: F16C 11/06

(54) **Articulation à rotule hermétique**
Abgedichtetes Kugelgelenk
Sealed ball-joint

(30) Priorité: 14.10.1992 FR 9212556
(43) Date de publication de la demande: 20.04.1994
(73) Titulaire: SARMA, F-26240 Saint-Vallier (FR)
(72) Inventeur: Soulie, Pascal, F-07370 Sarras (FR)
(74) Mandataire: Myon, Gérard Jean-Pierre

(56) Documents cités:
- EP-A- 0 072 278
- DE-A- 2 042 961
- FR-A- 2 349 058
- US-A- 2 499 346
- US-A- 3 656 221

## Description

La présente invention concerne une articulation à rotule hermétique comportant une pièce sphérique tronquée qui comprend des moyens pour résister à l'effort axial lors du sertissage de la bague extérieure connue en soi contre ladite pièce sphérique.

On connait des articulations à rotules de ce genre qui comprennent une bague extérieure pourvue d'un fond qui permet de fermer d'un côté une cavité dans laquelle tourne une pièce sphérique tronquée. La bague comporte un diamètre extérieur qui permet de déterminer celui de la pièce sphérique tronquée afin qu'il soit suffisant pour pouvoir utiliser le procédé de mise en forme par sertissage.

Une articulation à rotule du genre en question comprend certains inconvénients en ce qui concerne la modification dimensionnelle d'une part de l'espace libre prévu entre le fond de la cavité et la face tronquée de la pièce sphérique et d'autre part de la portée sphérique de ladite pièce.

En effet, lors du sertissage de la bague extérieure sur la pièce sphérique tronquée, cette dernière s'affaisse en direction du fond de la cavité. Cet affaissement a pour conséquence de bloquer l'articulation et de déteriorer la portée sphérique, ce qui augmente considérablement le nombre de rebuts.

Les brevets américains US-A-2 499 346 et US-A-3 656 221 divulguent des articulations dans lesquelles des parties sphériques tronquées sont logées dans des boitiers préformés qui ne sont pas sertis. Dans chaque cas, un élément élastique sépare une extension solidaire de la partie sphérique du fond de la cavité dans laquelle elle est logée.

La présence de cet élément élastique ne permet pas de sertir une bague extérieure sur la pièce sphérique tronquée.

C'est à ces inconvénients qu'entend plus particulièrement remédier la présente invention.

L'articulation à rotule suivant la présente invention a pour but de réaliser une articulation à double sphère de manière à obtenir deux surfaces d'appui, donc de rotation de la pièce sphérique et d'éviter l'affaissement de la pièce sphérique, lors de la mise en forme sous presse de la bague extérieure.

L'articulation à rotule suivant l'invention comprend une pièce sphérique tronquée comportant des moyens pour venir en appui contre le fond de la cavité afin de résister à l'effort axial exercé sur cette pièce sphérique lors du sertissage de la bague extérieure.

Suivant un premier mode d'exécution les moyens consistent en ce que la face tronquée de la pièce sphérique est pourvue en son centre d'un téton sphérique dont le centre coïncide avec celui de la pièce sphérique.

L'articulation à rotule se caractérise en variante en ce que les moyens consistent en ce que la face tronquée de la pièce sphérique est munie en son milieu d'un alésage borgne à fond sphérique dans lequel est engagée une bille de même diamètre que celui dudit fond sphérique et dont le centre coïncide avec celui de la pièce sphérique.

Le dessin annexé, donné à titre d'exemple, permettra de mieux comprendre l'invention, les caractéristiques qu'elle présente et les avantages qu'elle est susceptible de procurer :

Fig. 1 est une coupe illustrant l'articulation à rotule suivant la présente invention.

Fig. 2 est une vue semblable à celle de fig. 1, mais représentant une variante.

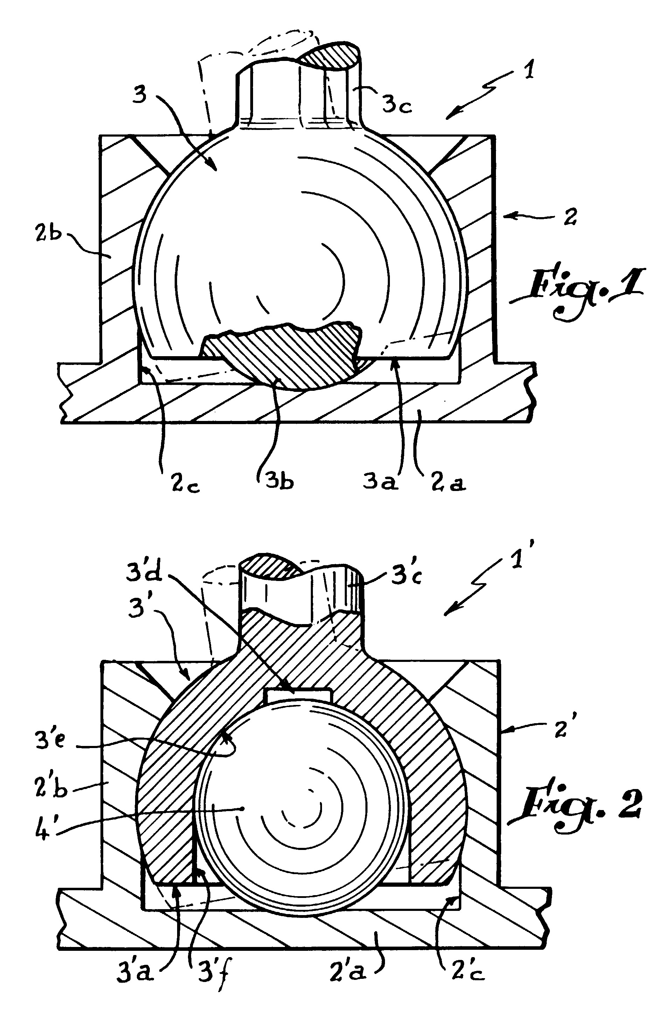

On a représenté en fig. 1 une articulation à rotule 1, comprenant une bague extérieure 2 connue en soi et une pièce sphérique tronquée 3.

La bague extérieure 2 est pourvue d'un fond 2a et d'une jupe 2b à profil extérieur cylindrique de manière à délimiter une cavité 2c.

La pièce sphérique 3 comprend une face tronquée 3a qui est pourvue en son milieu d'un téton sphérique 3b. Le centre du téton sphérique 3b coïncide avec celui de la pièce sphérique 3. Du côté opposé au téton sphérique 3b et suivant le même axe géométrique est prévue une queue 3c connue en soi.

La pièce sphérique 3 est tout d'abord introduite dans la cavité 2c de la bague extérieure 2 de manière que le téton sphérique 3b soit en appui contre le fond 2a de la cavité.

A la manière connue, la jupe 2b est déformée du côté ouvert de la cavité 2c de façon à emprisonner la pièce sphérique 3 à l'intérieur de la bague extérieure 2 afin de rendre le côté ouvert de la cavité 2c complètement hermétique à l'ambiance extérieure. Pendant la phase de sertissage, c'est-à-dire lors de la déformation de la jupe 2b la pièce sphérique 3 descend de quelques dixièmes de millimètres à l'intérieur de la cavité 2c. Le déplacement axial de la pièce sphérique 3 à l'intérieur de la bague extérieure 2 provoque une petite déformation de sa portée sphérique et une pénétration du téton sphérique 3b à l'intérieur du fond 2a de la cavité 2c. La présence du téton 3b augmente la surface d'appui de ladite pièce 3, afin de résister à l'effort axial lors de la mise en forme de la jupe 2b.

On a montré en fig. 2 une variante de l'articulation à rotule 1 de la présente invention. Cette variante référencée 1' comprend une bague extérieure 2' et une pièce sphérique tronquée 3' . La bague extérieure 2' est identique à celle décrite précédemment, c'est-à-dire qu'elle comprend un fond 2'a et une jupe 2'b à profil extérieur cylindrique de manière à délimiter une cavité ouverte 2'c.

La pièce sphérique 3' comprend une face tronquée 3'a qui est pourvue dans son milieu d'un alésage borgne 3'f à fond sphérique 3'e. A l'intérieur de l'alésage borgne 3'f est engagée par glissement une bille 4' de même diamètre que celui du fond sphérique 3'e. De plus, le centre de la bille 4' coïncide parfaitement avec celui de la pièce sphérique 3' . En outre, pour permettre le déplacement angulaire de la bille 4' à l'intérieur de la pièce sphérique 3', le fond 3'e est pourvu d'un évidement 3'd.

De même que pour la pièce sphérique 3, il est prévu sur la pièce 3' à l'opposé de la bille 4' et suivant le même axe géométrique une queue 3'c connue en soi.

La pièce sphérique 3' est introduite à la manière connue à l'intérieur de la bague extérieure 2' afin que la bille 4' vienne prendre appui contre le fond 2'a et que le côté ouvert de la cavité 2'c soit totalement hermétique à l'ambiance extérieure.

Pendant la phase de sertissage, c'est-à-dire lors de la déformation de la jupe 2'b, la pièce sphérique 3' descend à l'intérieur de la cavité 2'c de quelques dixièmes de millimètres. Le déplacement axial de la pièce sphérique 3' provoque une petite déformation de sa portée sphérique et une légère pénétration de la bille 4' à l'intérieur du fond 2'a de la cavité 2'c.

L'emboutissage du téton sphérique 3b et de la bille 4' à l'intérieur de leur fond 2a et 2'a respectif permet de maintenir les espaces libres prévus entre la face tronquée 3a, 3'a et le fond 2a, 2'a afin que les pièces sphériques 3 et 3' puissent se déplacer à l'intérieur des bagues 2 et 2'.

On note que l'emboutissage du téton sphérique 3b et de la bille 4' dans leur fond respectif 2a et 2'a permet d'augmenter la surface d'appui de chaque pièce sphérique 3 et 3' par rapport à sa bague 2, 2' .

En effet, les surfaces d'appui de chaque articulation 1 et 1' sont réalisées respectivement par une partie de la pièce sphérique tronquée 3 et 3' avec la cavité 2c et 2'c et par le téton sphérique 3b et la bille 4' avec le fond 2a et 2'a desdites cavités.

On remarque que la petite déformation sous le téton sphérique 3b ou sous la bille 4' augmente sur le plan géométrique la portée sphérique des pièces 3, 3' à l'intérieur de chaque bague extérieure 2 et 2' .

On constate enfin que lors de la phase de galetage, c'est-à-dire lors du déblocage des rotules, on obtient une parfaite maîtrise de la mise au jeu fonctionnel en diminuant considérablement le nombre de rebuts.

## Revendications

1. Articulation à rotule comprenant une bague extérieure (2,2') qui est pourvue d'un fond (2a,2'a) fermant d'un côté une cavité (2c,2'c) dans laquelle tourne une pièce sphérique tronquée (3,3') afin de rendre étanche l'articulation et qui est sertie contre ladite pièce sphérique sur son côté opposé au fond (2a, 2'a), caractérisée en ce que la pièce sphérique tronquée (3, 3') comporte des moyens (3b, 4') de venir directement en appui contre le fond (2a, 2'a) de la cavité (2c, 2'c) afin de résister à l'effort axial exercé sur la pièce sphérique (3, 3') lors du sertissage de la bague extérieure (2, 2').

2. Articulation à rotule suivant la revendication 1, caractérisée en ce que la face tronquée (3a) de la pièce sphérique (3) est pourvue en son milieu d'un téton sphérique (3b) dont le centre coincide avec celui de la pièce sphérique (3).

3. Articulation à rotule suivant la revendication 1, caractérisée en ce que le milieu de la face tronquée (3'a) de la pièce sphérique (3') est pourvue d'un alésage borgne (3'f) à fond sphérique (3'e) dans lequel est engagée à glissement une bille (4') de même diamètre que celui dudit fond sphérique (3'e) et dont le centre coincide avec celui de la pièce sphérique (3').

4. Articulation à rotule suivant l'une quelconque des revendications 1 à 3, caractérisée en ce que l'effort axial de sertissage de la bague extérieure (2, 2') provoque l'emboutissage du téton sphérique (3b) ou de la bille (4') à l'intérieur de leur fond (2a, 2'a) de manière à obtenir une articulation à rotule (1, 1') à double surface d'appui et totalement hermétique du côté ouvert de la cavité (2c, 2'c) à l'ambiance extérieure.

## Patentansprüche

1. Kugelgelenk mit einem Außenring (2,2'), der mit einem eine Seite eines Hohlraums (2c,2c') abschließenden Boden (2a,2'a) versehen ist, in dem sich ein abgeschnittenes Kugelstück (3,3') dreht, um das Gelenk dicht zu machen und der gegen das Kugelstück an der dem Boden entgegengesetzten Seite einzogen ist,
**dadurch gekennzeichnet**
daß das abgeschnittene Kugelstück (3,3') Mittel (3b,4') umfaßt, die sich direkt gegen den Boden (2a,2'a) des Hohlraums (2c,2c') abstützen, um dem axialen Druck zu widerstehen, der bei der Bördelung des Außenringes (2,2') auf das Kugelstück wirkt.

2. Kugelgelenk nach Anspruch 1, dadurch gekennzeichnet, daß die abgeflachte Fläche (3a) des Kugelstücks (3,3') in ihrer Mitte mit einem kugelförmigen Ansatz (3b) versehen ist, dessen Mitte mit der des Kugelstücks (3) übereinstimmt.

3. Kugelgelenk nach Anspruch 1, dadurch gekennzeichnet, daß die Mitte der abgeflachten Fläche (3'a) des Kugelstücks (3') mit einem Sackloch (3'f) mit kugelförmigem Boden (3'e) versehen ist, in dem gleitend eine Kugel (4') mit dem gleichen Durchmesser wie der des kugelförmigen Bodens (3'e) in Eingriff ist und deren Mitte mit der des Kugelstücks übereinstimmt.

4. Kugelgelenk nach einem der Ansprüche 1 bis 3, dadurch gekennzeichnet, daß der axiale Bördelungsdruck des Außenringes (2,2') ein Aufsetzen des kugelförmigen Ansatzes (3b) oder der Kugel (4') im Inneren ihres Bodens (2a,2'a) hervorruft, derart, daß ein vollständig hermetisch gegen die äußere Umgebung an der offenen Seite des Hohlraums (2c,2'c) abgeschlossenes Kugelgelenk (1,1') mit doppelter Abstützfläche erhalten wird.

## Claims

1. Ball and socket joint comprising an outer ring (2, 2') which is provided with a bottom (2a, 2'a) closing on one side a cavity (2c, 2'c) in which a truncated spherical piece (3, 3') rotates in order to render the joint tight and which is crimped against said spherical piece on its side opposite the bottom (2a, 2'a), characterized in that the truncated spherical piece (3, 3') comprises means (3b, 4') for bearing directly against the bottom (2a, 2'a) of the cavity (2c, 2'c) in order to resist the axial effort exerted on the spherical piece (3, 3') during crimping of the outer ring (2, 2').

2. Ball and socket joint according to Claim 1, characterized in that the truncated face (3a) of the spherical piece (3) is provided in its middle with a spherical stud (3b) whose centre coincides with that of the spherical piece (3).

3. Ball and socket joint according to Claim 1, characterized in that the middle of the truncated face (3'a) of the spherical piece (3') is provided with a blind bore (3'f) with spherical bottom (3'e) in which is slidably engaged a ball (4') having the same diameter as that of said spherical bottom (3'e) and whose centre coincides with that of the spherical piece (3').

4. Ball and socket joint according to any one of Claims 1 to 3, characterized in that the axial crimping effort of the outer ring (2, 2') provokes stamping of the spherical stud (3b) or of the ball (4') inside their bottom (2a, 2'a), so as to obtain a ball and socket joint (1, 1') with double bearing surface and totally hermetic on the side of the cavity (2c, 2'c) open to the outside environment.
